Europäisches Patentamt

European Patent Office

Office européen des brevets

(19)

(11) Publication number: **0 501 381 A2**

# EUROPEAN PATENT APPLICATION

(12)

(21) Application number: **92103069.8**

(22) Date of filing: **24.02.92**

(51) Int. Cl.⁵: **A23L 2/16, A23L 2/30,**
**C12H 1/02**

(30) Priority: **26.02.91 IT 5391**

(43) Date of publication of application:
**02.09.92 Bulletin 92/36**

(84) Designated Contracting States:
**ES FR GR PT**

(71) Applicant: **Pifferi, Francesco**
**Via Ortolani, 3**
**I-40139 Bologna(IT)**
Applicant: **Pifferi, Daniele**
**Via Ortolani, 3**
**I-40139 Bologna(IT)**
Applicant: **Cesarin, Emilia Rosa**
**Via Ortolani, 3**
**I-40139 Bologna(IT)**
Applicant: **Pifferi, Valeria**
**Via Ortolani, 3**
**I-40139 Bologna(IT)**
Applicant: **Pifferi, Pier Giorgio**
**Via Ortolani, 3**
**I-40139 Bologna(IT)**

(72) Inventor: **Pifferi, Francesco**
**Via Ortolani, 3**
**I-40139 Bologna(IT)**
Inventor: **Pifferi, Daniele**
**Via Ortolani, 3**
**I-40139 Bologna(IT)**
Inventor: **Cesarin, Emilia Rosa**
**Via Ortolani, 3**
**I-40139 Bologna(IT)**
Inventor: **Pifferi, Valeria**
**Via Ortolani, 3**
**I-40139 Bologna(IT)**
Inventor: **Pifferi, Pier Giorgio**
**Via Ortolani, 3**
**I-40139 Bologna(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) **Method for treating and stabilizing alimentary liquids with recovery and regeneration of the stabilizing agent.**

(57) The method for treating alimentary liquids of vegetable origin - such as musts, wines, beers, juices or else aqueous or aqueous alcoholic extracts or else concentrates of fruit, citrus fruits or vegetables -- entails the addition to the liquid to be treated of chitosan in the form of a powder thereof or of a solution thereof or of its salts; the agitation of the liquid to which the chitosan has been added and then, after a sedimentation time, the filtration thereof on a cartridge which contains stacked partitions on which there are arranged at least one first layer of chitosan or a mixture of chitosan and of filtration-assisting material, and at least one second layer of organic and/or inorganic filtration material suitable for physically and/or chemically retaining the chitosan possibly present in the filtered liquid; the separation of the chitosan by means of a hydraulic flow of a solvent, which is furthermore suitable for partially recovering adsorbed material; the regeneration of the chitosan by means of a sequence of treatments with solvents and/or aqueous, neutral, acid or alkaline solutions so as to allow its reuse.

The present invention relates to a method for treating alimentary liquids of vegetable origin -- such as musts, wines, beers, juices or else aqueous or aqueous alcoholic extracts or else concentrates of fruit, citrus fruits or vegetables -- in order to stabilize said liquids particularly as regards their color, taste and aroma, with recovery and regeneration of the stabilizing agent.

The color change of red wines and most of all of white ones, of vegetable juices as such and of their concentrates, and furthermore the control of polyphenols during beer production in order to avoid turbidity in preservation, are problems of considerable interest for various industries in the agroalimentary sector.

The change in color or the forming of turbidity are in fact often accompanied by a change in the taste and aroma of the beverages: this change can be ascribed to the oxidation of certain components, to the condensation between oxidized and non-oxidized components, and to polymerization reactions which, in a moderately acid environment, are catalyzed by traces of metals (iron, copper, manganese and the like) which may be present.

Accordingly, there is the need to produce vegetable beverages or concentrates which keep intact the organoleptic characteristics which derive from the original fruit or vegetable or from the product obtained through industrial treatment, without browning and/or forming dregs.

Various methods are currently used, with this aim, in the technology of vegetable beverages. In particular, the use is known of adsorbent substances for removing from the beverages, prior to packaging, oxidation products or other components (such as polyphenols, proteins and traces of metals) which, due to their nature and concentration, might alter the organoleptic characteristics during the concentration step.

However, the adsorbents used so far are not free from problems. Carbon in fact performs an effective action, but deprives the beverages of peculiar aromas: polyvinylpyrrolidone, besides having a very high cost, does not act on anionic colloids, which can contribute to producing turbidity; silica gel and bentonite are scarcely effective, in particular for polyphenols, whereas gelatine and other proteins, which would be effective for said polyphenols, are more expensive and cause potential instability by dissolving in the beverage.

Furthermore, none of said polymers allows regeneration of the adsorbent for possible reuse. This is disadvantageous both from the economic point of view and from the environmental point of view, since an amount of adsorbed organic material up to ten times the weight of the adsorbent or filter aid may be associated with the adsorbent. This mixture of adsorbent and adsorbed substance is currently a waste material.

The aim of the present invention is to provide an industrial method for treating alimentary liquids of vegetable origin -- especially musts, wines (in particular white and rosé wines or wines to be used for production of sparkling wine), vegetable extracts or juices rich in polyphenols (such as grapes, cherries, plums, apples, pears, persimmons, artichokes) or citrus fruit juices (for example, orange juice or grape-fruit juice) or liquids fermented from berries -- so that said liquids, kept at room temperature and even in the light, have a prolonged stability in their organoleptic and color characteristics, and to also regenerate the stabilizing agent for its repeated reuse.

Within the scope of this aim, a further object of the present invention is to provide a method for treating alimentary liquids which is very simple and economically advantageous.

This aim and this object are both achieved, according to the invention, by the present method for treating alimentary liquids of vegetable origin -- such as musts, wines, beers, juices or else aqueous or aqueous alcoholic extracts or else concentrates of fruit, citrus fruits or vegetables -- which is characterized in that it entails the addition to the liquid to be treated, at a temperature of up to 45°C, of chitosan (polyglucosamine) in the form of a powder thereof or of malate, tartrate or citrate salts thereof or in the form of a solution of said salts in such an amount that 10 to 300 g of chitosan are found in a hectoliter of liquid, said powder having a grain size of less than 250 µm; the agitation of the liquid to which the chitosan was added and then, after a sedimentation time of up to 24 hours, the filtration thereof on a cartridge which contains stacked and appropriately spaced partitions on which there are arranged respectively at least one first layer of chitosan in powder form, measuring up to 5 mm in diameter, or a mixture of chitosan and of filter aid material, and at least one second layer of organic and/or inorganic filtration material with a grain size of less than 0.250 mm, suitable for physically and/or chemically retaining the chitosan possibly present in the filtered liquid; the separation of said chitosan by means of a hydraulic flow of a solvent which is furthermore suitable for partially recovering adsorbed material; the regeneration of the chitosan by treatment, in total or partial sequence, with neutral solvent, organic solvent, aqueous acid solutions or organic solutions acidified with mineral acids or organic acid, with alkaline solutions constituted by hydrates of alkaline metals and salts thereof in distilled water or in an organic solvent or mixtures thereof, at a temperature comprised between 0°C and the boiling point of the solution at ambient pressure, for a time comprised between 10 minutes and 4 hours, and then with distilled water; the drying of said chitosan at a temperature below 85°C, so as to allow its reuse to stabilize said vegetable liquids; finally, the regeneration of said mineral layer by combustion at 400°C for a time comprised between 2 and 5 hours.

The liquid to be treated, possibly centrifuged, in the case of a pulp-rich juice, or prefiltered on a bed of siliceous material (fossil flour, perlite, celite) gets chitosan with a deacetylation degree of up to 85%, added to it.

The liquid to which chitosan has been added is filtered on a column (cartridge) which contains at least two appropriately spaced and stacked partitions of metallic or plastic mesh or of porous glass. A first partition bears a layer of chitosan in powder form, in such an amount as to have 100 to 4000 g of chitosan on a filtration surface of 100 to 10,000 $cm^2$, or of a mixture of chitosan and filter aid material, constituted by fossil flour, silica gel, cellulose or bentonite, in a ratio comprised between 1:10 and 10:1, per cubic meter of filtered liquid; a second partition bears a layer of filtration material, constituted by organic material such as cellulose, or mineral material such as fossil flour, silica gel or hydrated bentonite, silicates or mixtures thereof, with a grain size of less than 0.250 mm, in an amount of 2:1 to 8:1 with respect to the chitosan.

The rate of filtration through said cartridge is comprised between 10 and 500 $cm^3$/hour per square centimeter of filtration surface of the partition, so as to ensure a time of contact between the liquid and the chitosan comprised between 0.5 and 60 minutes.

The chitosan is separated from the mineral components of the filter cake (batch system) or of the filtration layer (on-line system) by means of a fluid-bed hydraulic flow of a solvent, constituted by distilled water or alcohols --methyl, ethyl, propyl or isopropyl alcohol -- or acetone or mixtures thereof, with recycling of said solvent and with simultaneous recovery of adsorbed material (sugars, acids, aromas, phenols) and of the solvent by means of vacuum distillation.

After separating the mineral material, the chitosan, which may still be impure due to pectins, cellulose, hemicellulose, proteins and gums is regenerated in a Soxhlet-type extractor or in a packed column with a sequence of solvents constituted by: neutral solvent (distilled water); organic solvent (methyl, ethyl, propyl or isopropyl alcohols, acetone or ethyl acetate), with a ratio between chitosan and solvent comprised between 1:1 and 1:200; aqueous acid solutions or organic solutions acidified with hydrochloric acid, nitric acid or an organic acid -- acetic, formic, citric, malic, succinic, lactic, tartaric acid --with a pH comprised between 1.0 and 5.0 at a temperature not higher than 60°C, so as to precipitate the chitosan for pH values comprised between 6.5 and 14 with powders and solutions of alkaline hydroxides or salts of alkaline metals -- such as carbonates, bicarbonates, citrates, malates, sulphites, tartrates, lactates -- of normality comprised between 0.001 N and 12 N, or with solvents such as acetone and alcohols, with a ratio between chitosan and solution comprised between 1:1 and 1:200; alkaline solvent constituted by 0.00001 N to 12 N aqueous solutions of alkaline hydroxides or of alkali and alkaline-earth metal hydroxides, citrates, tartrates, carbonates, bicarbonates, sulphites, malates, gluconates, lactates of alkaline metals with pH comprised between 8 and 14, or by solutions of said hydroxides or salts in organic solvent (acetone; methyl, ethyl, propyl or isopropyl alcohol; or ethyl acetate) or of mixtures thereof, in a volume ratio comprised between 99:1 and 1:99 between said solvents and said aqueous alkaline solutions, at a temperature comprised between 0°C and the boiling point of the solution at ambient pressure, for a time comprised between 1 and 6 hours, in a non-oxidizing atmosphere of $N_2$ or $CO_2$ and with a ratio between chitosan and solution comprised between 1:1 and 1:200.

The sequence for treating the chitosan with the solvent can be complete or partial, as well as fully or partially reversed on the basis of the analysis of the material adsorbed on the chitosan and of the macromolecules which can be associated with it in suspension (proteins, pectins, gums).

The regenerated chitosan is washed with boiling distilled water and is dried at a temperature of less than 85°C.

The siliceous material obtained from the separation of the chitosan is reused after heating in an oven at 400°C for 3-5 hours, so as to reactivate the adsorbent function, burn the residual organic substance and sterilize the material.

The percentage of chitosan and the grain size of the powders will vary within the indicated ranges according to the content of polyphenols and proteins and to the degree of browning of the treated liquid.

The stabilization of the alimentary liquid which has undergone the treatment according to the invention seems to be ascribable to the adsorption, on the part of the chitosan, of polyphenols, phenolic amino acids, traces of metals, enzyme proteins, keto acids and aldehydes, all of which are compounds which can give rise to browning reactions in a moderately acid environment.

It is noted that for wines and for apple and citrus fruit juices, treatment with chitosan or with the salt thereof can be performed prior to the final treatment with bentonite or silica gel or cellulose, or after a preliminary treatment with fossil flour, silica gel or other minerals, such as for example bentonite or sodium silicate.

The times and sequences of the treatments of the chitosan for its regeneration and the treatment times vary according to the type and quantity of the chemical species adsorbed during the treatment of the beverage and according to the nature of the treated vegetable liquid.

Further details will become apparent from the description of some preferred embodiments of the method of treatment of the alimentary liquid according to the present invention, which are given hereinafter only by way of non-limitative example.

Example 1

Half a liter of white Lambrusco wine, made from red grapes, is filtered at the rate of 2 liters/hour through a glass column measuring 50 cm by 3 cm in diameter, which contains a porous partition with an average pore diameter of 20 $\mu$m; a layer of 0.5 cm of celite 545 is arranged on the partition and retains the suspended material. The liquid then passes into another glass column having the same dimensions (cartridge), provided with a porous partition which supports, in this order, a 4 g layer of celite 545, a 2 g layer of silica gel (with grain size comprised between 0.040 and 0.080 mm) and a 2.0 g layer of chitosan in powder form (particle diameter less than 2 mm). The filtrate, analyzed with Folin-Ciocalteu reagent, reveals a 40% decrease in total polyphenols; optical density at 420 nm after 48 hours at 50°C (madeirization test) is 35% lower than the control test.

The first layer of celite with the suspended material is burned at 400°C for 3 hours in a muffle kiln, obtaining a material ready for subsequent reuse.

The cartridge is initially treated with 50 ml of distilled water in order to remove adsorbed alcohols, sugars and acids. Acetone is caused to flow through it in order to extract aromas and polyphenols. A 0.1% weight/volume solution of caustic soda, equal to approximately 60 ml, is then caused to flow at the rate of 0.2 liters/hour at a temperature of 25°C, followed by further distilled water, heated at 50°C, at the same rate until the effluent reaches pH 6.0. The cartridge is then ready for reuse and the chitosan is capable of working as an effective adsorbent of the compounds which are responsible for madeirization for even up to 15 times.

Example 2.

One liter of Trebbiano white wine, notoriously prone to madeirization, after filtration on a bed of fossil flour in order to retain the suspended material, is treated with chitosan powder with a grain size comprised between 0.150 and 0.500 mm with a ratio of 1 g of chitosan per liter; the treatment is performed at 20°C for 30 minutes. The dregs are filtered in a glass column which contains fossil flour having dimensions comprised between 0.040 and 0.250 mm and then on ordinary filter paper. Further filtration on fossil flour may be performed in case of slight turbidity.

The siliceous layer which contains the chitosan which has adsorbed various substances is treated with a flow of acetone-water (with a 3:1 ratio) at the rate of 5-50 ml/minute per square centimeter, from the bottom upward, so as to remove the chitosan practically without losses, separating it from the fossil flour. The fossil flour is heated in a muffle kiln at 400°C for 4 hours, obtaining a product ready for reuse.

The chitosan is separated from the acetone-water solution by filtration; the liquid is concentrated under vacuum in order to obtain an aqueous solution which is rich in acids, polyphenols and aromas and to recover the acetone. The chitosan is treated with 150 ml of 1% aqueous solution of tartaric acid, at a temperature of 40°C, in a glass container, for 30-60 minutes. Due to the pH, which is equal to approximately 2.50, the chitosan is dissolved, whereas celluloses, hemicelluloses, pectins and, in part, proteins remain undissolved; filtration is then performed on a glass partition with aspiration and the filtrate is allowed to drop into 150 ml of 1% sodium hydrate solution. The chitosan precipitates in flocs, whereas the proteins remain in solution. The chitosan is filtered and suspended in 50 ml of tepid distilled water three times, until a neutral pH is reached, and is then dried at a temperature of not more than 100°C.

Said chitosan has been used ten times to stabilize as many samples of Trebbiano wine, obtaining a substantially unchanged decrease in polyphenols.

Example 3.

1.5 kg of Golden apples are mashed and get 1.5 g of pectolytic enzyme added to them, the mass being homogenized well. After 60 minutes at 25°C, the mass is pressed and 1.2 liter of juice are obtained; said juice is treated with 1.0 g of pectolytic enzymes and is kept at 50°C for 2 hours; the pectins precipitate and the juice, clarified and filtered on filter paper, is divided into 10 portions. A 100 ml portion is filtered on a glass cartridge which contains a layer of 300 mg of chitosan powder, supported on a glass partition, having an area of 1 cm$^2$, and a second layer constituted by 0.4 g of fossil flour mixed with 0.3 g of silica gel with a grain size comprised between 0.020 and 0.200 mm, supported by a partition of porous glass; the rate of the flow is 0.4 liters/hour per square centimeter.

The liquid, which is slightly turbid, is re-filtered, with a permanence time of 2 minutes. The polyphenol content is reduced by 40%, and absorption at 420 nm after 48 hours of heating at 50°C in a closed ampoule is 35% lower than the control test; this fact indicates good stabilization.

To regenerate the chitosan, water is passed through the filtration cartridge and removes salts, sugars, acids and part of the polyphenols; then 50.0 ml of a 0.1 N aqueous solution of sodium carbonate at 50°C are caused to flow through in order to remove pectins, proteins and polyphenols and to regenerate the chitosan. Then washing is performed with distilled water and 0.001% tartaric acid solution, and the cartridge is reused and regenerated in the same way ten times for the remaining apple juice samples, always obtaining the same results.

Example 4.

One liter of Lambrusco wine gets 3.0 g of fossil flour with a grain size of less than 0.2 mm added to it and is filtered on a paper filter and then in a glass column which has, in succession, three glass partitions spaced 2 cm from one another; each of the first two partitions supports 1.0 g of chitosan powder with a grain size of less than 2 mm for the first partition and of less than 0.2 mm for the second one, whereas the third partition supports 10 g of a mixture of fossil flour and hydrated bentonite in a 2:1 ratio. The filtration rate is 10 ml/minute per square centimeter.

The filtrate shows a 50% reduction in polyphenol content with respect to the original sample, and after 48 hours at 50°C in a closed ampoule it has, at 420 nm, an absorbance reduced by 30% with respect to the untreated wine.

The two chitosan layers are removed and, after washing with acetone and water, treated in an erlenmeyer flask at 80°C three times each with 15 cubic centimeters of 0.02 N aqueous solution of potassium hydroxide and then three times with distilled water.

The chitosan is stratified on said two porous glass partitions, and the operation for treatment of the Lambrusco wine and for the regeneration of the adsorbent is repeated fifteen times, obtaining the same effect of 50% polyphenol reduction and of reduction of the forming of orange color at 420 nm.

## Claims

1. Method for treating alimentary liquids of vegetable origin -- such as musts, wines, beers, juices or else aqueous or aqueous alcoholic extracts or else concentrates of fruit, citrus fruits or vegetables -- which is characterized in that it entails the addition to the liquid to be treated, at a temperature of up to 45°C, of chitosan (polyglucosamine) in the form of a powder thereof or of malate, tartrate or citrate salts thereof or in the form of a solution of said salts in the amount of 10 to 300 g of chitosan per hectoliter of liquid, said powder having a grain size of less than 250 $\mu$m; the agitation of said liquid to which chitosan or a salt thereof has been added and then, after a sedimentation time of up to 24 hours, the filtration thereof on a cartridge which contains stacked and appropriately spaced partitions on which there are arranged respectively at least one first layer of chitosan in powder form, measuring up to 5 mm in diameter, or a mixture of chitosan and of filter aid material, and at least one second layer of organic and/or inorganic filtration material with a grain size of less than 0.250 mm, suitable for physically and/or chemically retaining the chitosan possibly present in the filtered liquid; the separation of said chitosan by means of a hydraulic flow of a solvent which is furthermore suitable for partially recovering adsorbed material; the regeneration of the chitosan by treatment, in total or partial sequence, with neutral solvent, organic solvent, aqueous acid solutions or organic solutions acidified with mineral acids or organic acid, with alkaline solutions constituted by hydrates of alkaline metals and salts thereof in distilled water or in an organic solvent or mixtures thereof, at a temperature comprised between 0°C and the boiling point of the solution at ambient pressure, for a time comprised between 10 minutes and 4 hours, and then with distilled water; the drying of said chitosan at a temperature below 85°C, so as to allow its reuse to stabilize said vegetable liquids; finally, the regeneration of said mineral layer by combustion at 400°C for a time comprised between 2 and 5 hours.

2. Method according to claim 1, characterized in that said liquid to which chitosan has been added is filtered in a cartridge which contains at least two appropriately spaced stacked partitions of metallic or plastic mesh or of porous glass, the first of said partitions bearing said first layer of chitosan in the form of powder having a diameter of up to 5 mm in such an amount as to have 100 to 4000 g of chitosan on a filtration surface of 100 to 10,000 cm$^2$, or of a mixture of chitosan and filter aid material, constituted by fossil flour, silica gel, cellulose or bentonite, in a ratio comprised between 1:10 and 10:1, per cubic meter of filtered liquid, whereas the second partition bears said second layer of filtration material, constituted by organic material such as cellulose, or mineral material such as fossil flour, silica gel or hydrated bentonite, silicates or mixtures thereof, with a grain size of less than 0.250 mm, in an amount of 2:1 to 8:1 with respect to the chitosan.

3. Method according to claim 1, characterized in that the rate of filtration through said cartridge is comprised between 10 and 500 cm$^3$/hour per square centimeter of filtration surface of said partition.

4. Method according to claim 1, characterized in that said chitosan of the filtration layer is regenerated by treatment, in total or partial sequence, with neutral solvent (water); with organic solvent (methyl, ethyl, propyl or isopropyl alcohols, acetone or ethyl acetate); with aqueous acid solutions or organic solutions acidified with hydrochloric acid, nitric acid or organic acid --acetic, formic, citric, malic, succinic, lactic, tartaric acid -- with a pH comprised between 1.0 and 5.0 at a temperature not higher than 60°C; with an alkaline solvent constituted by 0.00001 N to 12 N aqueous solutions of alkaline hydroxides or alkali and alkaline-earth metal hydroxides, citrates, tartrates, carbonates, bicarbonates, sulphites, malates, lactates or gluconates of alkaline metals, with pH comprised between 8 and 14, or by solutions of said hydroxides or salts in organic solvent (acetone; methyl, ethyl, propyl, isopropyl alcohols; or ethyl acetate) or of mixtures thereof, in a volume ratio comprised between 99:1 and 1:99 between said solvents and said aqueous alkaline solutions, at a temperature comprised between 0°C and the boiling point of the solution at ambient pressure, the ratio between chitosan and solvent being comprised between 1:1 and 1:10, and for a time of up to 6 hours.

5. Method according to claim 1, characterized in that said chitosan is separated from said filter aid material by means of a hydraulic flow in a fluid bed of a solvent, constituted by distilled water or alcohols -- methyl, ethyl, propyl or isopropyl alcohol -- or acetone, or mixtures thereof, with recycling of said solvent and with simultaneous recovery of adsorbed material (sugars, acids, aromas, phenols) by vacuum distillation.

6. Method according to claim 1, characterized in that before adding chitosan to the liquid to be treated, it entails the possible separation of suspended material by centrifugation or by filtration with the addition of filter aid material.